# EUROPEAN PATENT APPLICATION

(11) **EP 2 204 140 A1**
(43) Date of publication of application: **07.07.2010**
(21) Application number: 09157399.8
(22) Date of filing: 06.04.2009
(51) Int. Cl.: A61C 15/04

(54) **Coil type interdental brush**

(30) Priority: 05.01.2009 WO PCT/KR2009/000020
(71) Applicant: Kim, Tae Jin, Middletown, CT 06459-1101 (US)
(72) Inventor: Kim, Tae Jin, Middletown, CT 06459-1101 (US)
(74) Representative: Caspary, Karsten

(57) **Abstract**

A coil type interdental brush is disclosed. The interdental brush includes a handle (10), and a brush part (20) or a dental floss part (40) which is connected to the handle. The brush part or the dental floss part includes a coiled portion (21) or (41) which has a coil shape or is formed by repeatedly bending. The brush part or the dental floss part is inserted between teeth and removes food remnants from them in such a way that while moving forwards and backwards, it pushes out the food remnants from the teeth or collects the food remnants in a space in the coiled portion using the elastic deformation and restoring force of the coiled portion. The present invention has a simple structure and thus simplifies the manufacturing process. Furthermore, superior cleaning ability is ensured.

## Description

### [Technical Field]

The present invention relates, in general, to interdental brushes and, more particularly, to an interdental brush which removes food remnants trapped between teeth.

### [Background Art]

Generally, toothbrushes have a plurality of bristles and are used to brush the surfaces of teeth. However, there is a limitation in removing food remnants trapped between teeth using such a toothbrush. To overcome this difficulty, separate interdental brushes which remove food remnants trapped between teeth have been used.

Typically, an interdental brush according to a conventional technique is constructed such that thin bristles are fixed between two steel wires which are twisted together.

However, the conventional interdental brush is problematic in that efficiency of removing plaque is poor because the bristles are easily contaminated by plaque. A lot of research has been conducted to try and solve this problem.

For example, an interdental brush was proposed in Korean Utility Model Laid-open Publication No. 1999-22126, in which a guide tip extends a predetermined length from an end of a steel core which protrudes from a main body and holds bristles. In addition, an interdental brush was proposed in Korean Utility Model Registration No. 276325, in which at least one portion with an enlarged diameter which is formed by increasing the length of bristles towards an end of a core is provided on the core.

Furthermore, an interdental brush which includes a main body having a handle on one end thereof and having a head part on the other end was proposed in Korean Utility Model Laid-open Publication No. 370912. A through hole is formed through the main body in the longitudinal direction. A filament for eliminating food remnants trapped between teeth is installed in the through hole of the main body. The filament is extracted from the head part by an extracting means provided on a predetermined portion of the main body, such that the filament is perpendicular to the main body.

As well, an interdental brush including a main body part and a bristle support part was proposed in Korean Patent Registration No. 321214, in which an angle of the bristle support part relative to the main body part is controlled by an angle adjustment part. In this interdental brush, the bristle support part is connected to the main body part by a coupling unit. Furthermore, an angle adjustment means is provided in the upper end of the main body part and the lower end of the bristle support part such that the angle of the bristle support part relative to the main body part can be adjusted by manipulating the angle adjustment part.

However, in the conventional interdental brushes, when the interdental brushes are separated from the teeth, impurities which are stuck to the bristles may not be satisfactorily carried away from the teeth by the brush, because the impurities are pressed onto the inner surfaces of the teeth by the bristles and thus become attached to the teeth again.

### [Disclosure]

### [Technical Problem]

Accordingly, the present invention has been made keeping in mind the above problems occurring in the prior art, and an object of the present invention is to provide an interdental brush which has a simple structure, thus simplifying the manufacturing process, and which has superior cleaning ability to the extent of satisfactorily removing food remnants from the inner surfaces of teeth.

### [Technical Solution]

In order to accomplish the above object, the present invention provides a coil type interdental brush, including: a handle (10); and a brush part (20) connected to the handle (10) and having a coiled portion (21), the coiled portion (21) having a coil shape or being repeatedly bent, so that the brush part (20) is inserted between teeth and removes food remnants from the teeth in such a way that while the brush part (20) moves forwards and backwards, the brush part (20) pushes out the food remnants from the teeth or collects the food remnants in a space in the coiled portion (21) using an elastic deformation and restoring force of the coiled portion (21).

In order to accomplish the above object, the present invention provides a coil type interdental brush, including: a handle (10); a support (30) branching from an end of the handle (10) into two parts; and a dental floss part (40) supported between the two branches of the support (30) and having a coiled portion (41), the coiled portion (41) having a coil shape or being repeatedly bent, so that the dental floss part (40) is inserted between teeth and removes food remnants from the teeth in such a way that while the dental floss part (40) moves forwards and backwards, the dental floss part (40) pushes the food remnants out of the teeth or collects the food remnants in a space in the coiled portion (41) using an elastic deformation and restoring force of the coiled portion (41).

The coiled portion (21) of the brush part or the coiled portion (41) of the dental floss part may be continuously formed along an entire length of the brush part (20) or the dental floss part (40).

The coiled portion (21) of the brush part or the coiled portion (41) of the dental floss part may have a radius of curvature which increases or be reduced from both ends of the coiled portion (21) or (41) to a medial portion thereof with respect to a longitudinal direction of the coiled portion (21) or (41).

The brush part (20) or the dental floss part (40) may further have a linear portion (22) or (42) which does not bend.

The linear portion (22) of the brush part or the linear portion (42) of the dental floss part may have a length corresponding to a thickness of a molar tooth.

The brush part (20) or the dental floss part (40) may have coiled portions (21) or (41) and linear portions (22) or (42) which alternate with each other.

The brush part (20) or the dental floss part (40) may have one rounded cross-section including a circular cross-section and an elliptical cross-section, such that a circumferential outer surface thereof forms a rounded surface.

The brush part (20) or the dental floss part (40) may have one polygonal cross-section including a triangular cross-section and a rectangular cross-section, and a semicircular cross-section, such that pointed portions or bent surfaces are formed around an outer surface thereof.

Furthermore, a plurality of protrusions (23) or (43) may be provided on an outer surface of the brush part (20) or the dental floss part (40), or a single protrusion (23) or (43) may protrude from the outer surface of the brush part (20) or the dental floss part (40) in a radial direction. The single protrusion (23) or (43) may be continuous in a longitudinal direction of the brush part (20) or the dental floss part (40).

The brush part (20) or the dental floss part (40) may be made of one selected from metal, plastic and silicone.

The handle (10), the brush part (20), the support part (30) or the dental floss part (40) may be made of biodegradable resin.

The handle (10), the brush part (20), the support part (30) or the dental floss part (40) may be formed by extruding or injection molding using biodegradable plastic melt which is made from one or a mixture of two or more of PCL (polyε -caprolactone), PLA (polylactic acid), Diol/Diacid based-on aliphatic polyester, PG (polyglycolic acid), polyphosphate ester and polyphosphazene.

The handle (10) and the brush part (20), or the handle (10) and the support (30), or the support (30) and the dental floss part (40) may be integrally formed by injection molding.

The handle (10) and the brush part (20), or the handle (10) and the support (30), or the support (30) and the dental floss part (40) may have different hardnesses, elasticities and colors, and the handle (10) and the brush part (20), or the handle (10) and the support part (30), or support part (30) and the dental floss part (40) may be consecutively integrally formed with each other through a double injection molding process.

The brush part (20) or the dental floss part (40) may be formed in a thickness ranging from 0.01mm to 0.2mm by injection molding using a micro-mold.

### [Advantageous Effects]

In the interdental brush according to the present invention, food remnants can be easily removed from teeth by the simple operation of passing the brush part or the dental floss part between the teeth in such a way that while the brush part or the dental floss part moves forwards and backwards, it pushes the food remnants out of the teeth or collects the food remnants in a space in the coiled portion by using elastic deformation and restoring force of the coiled portion.

Furthermore, the interdental brush of the present invention has superior cleaning ability to the extent of satisfactorily removing food remnants from the teeth. In addition, food remnants which are collected by the brush part or the dental floss part can be easily removed therefrom by putting the brush part or the dental floss part into a cup containing water and lightly shaking the brush part or the dental floss part or by bringing it into contact with flowing water. Accordingly, the interdental brush of the present invention can be effectively used for the prevention of dental disease.

Moreover, despite having a simple structure including only the coiled portion without having lots of bristles or a separate angle control means, superior cleaning ability can be exhibited. Therefore, the manufacturing process and equipment for manufacturing the interdental brush can be simplified. As a result, the equipment cost and production cost required for manufacturing the interdental brush can be markedly reduced.

As well, the interdental brush of the present invention can be modified by injection molding, extruding, cutting or grinding into various shapes, for example, to have a rounded cross-section, such as a circular or elliptical cross-section, or an angled cross-section, including a polygonal cross-section, such as a triangular or rectangular cross-section, and a semicircular cross-section.

In addition, in the case where the interdental brush is made of biodegradable resin, it is environmentally-friendly because of high degradability. Furthermore, even though the interdental brush is brought into contact with the human body or part thereof is imbibed by the human body, safety or health problems, for example, skin irritation, accumulation inside the body, the inception of cancer, etc., which have been caused by contact being made with conventional artificial synthetic products or their being imbibed, are prevented due to the environmentally-friendly and biodegradable characteristics. Therefore, anyone, including children, old people, patients, etc., can safely use the interdental brush of the present invention.

Furthermore, the brush part or the dental floss part can be formed in the fine, micrometer scale thickness by a micro-mold. Hence, the flexibility and elasticity of the brush part or the dental floss part can be optimized such that stimulation applied to the teeth or gums is minimized. Thus, anyone, including children, old people, patients, etc., can safely use the interdental brush of the present invention.

### [Description of Drawings]

FIG. 1 is a plan view illustrating a coil type interdental brush, according to a first embodiment of the present invention;
FIG. 2 is of views illustrating various modifications of the coil type interdental brush of FIG. 1;
FIG. 3 is a plan view showing the use of the coil type interdental brush of FIG. 1 or 2;
FIG. 4 is of a plan view and a side view illustrating a coil type interdental brush, according to a second embodiment of the present invention;
FIG. 5 is of views illustrating various modifications of the coil type interdental brush of FIG. 4;
FIG. 6 is of front projection views showing a process of inserting the coil type interdental brush of FIG. 4 or 5 between the teeth;
FIG. 7 is a plan view showing the use of the coil type interdental brush of FIG. 4 or 5;
FIG. 8 is of enlarged views showing a circle portion A of FIG. 3 or a circle portion B of FIG. 7; and
FIG. 9 is of sectional perspective views showing various examples of a brush part or a floss part according to the present invention.

### <Description of the elements in the drawings>

10: handle 20: brush part
21: coiled portion of brush part
22: linear portion of brush part
23: protrusion of brush part
30: support part
40: dental floss part
41: coiled portion of dental floss part
42: linear portion of dental floss part
43: protrusion of dental floss part

### [Best Mode]

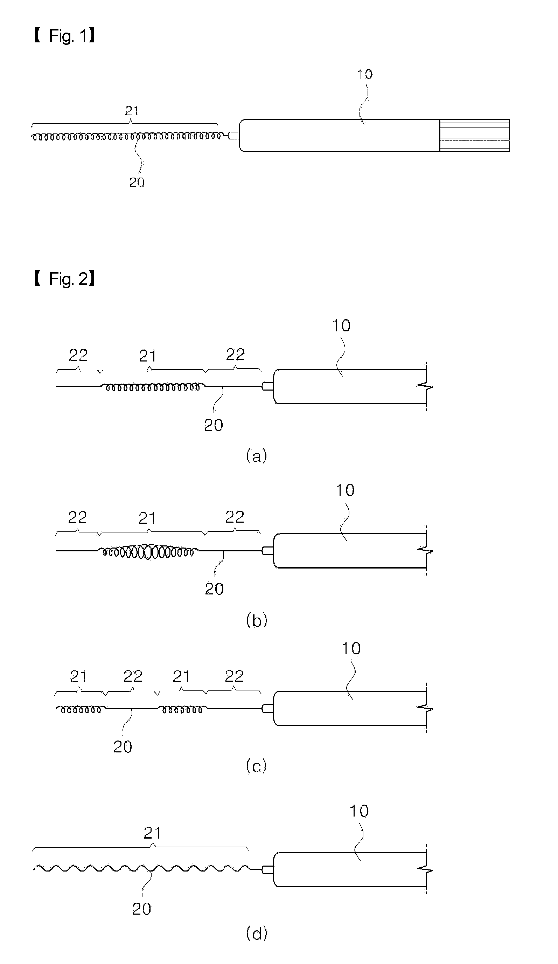

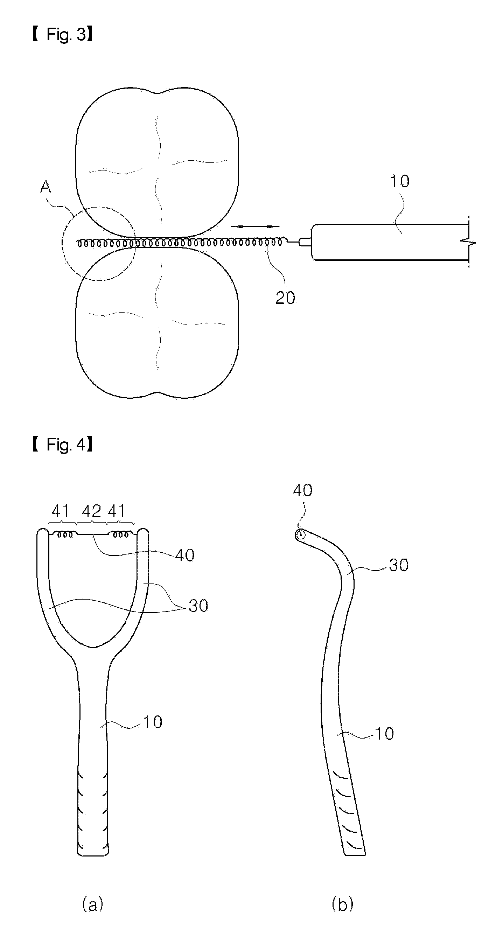

FIG. 1 is a plan view illustrating a coil type interdental brush, according to a first embodiment of the present invention. FIG. 2 is of views illustrating various modifications of the coil type interdental brush shown in FIG. 1. FIG. 3 is a plan view showing the use of the coil type interdental brush of FIG. 1 or 2. FIG. 4 is of a plan view and a side view illustrating a coil type interdental brush, according to a second embodiment of the present invention.

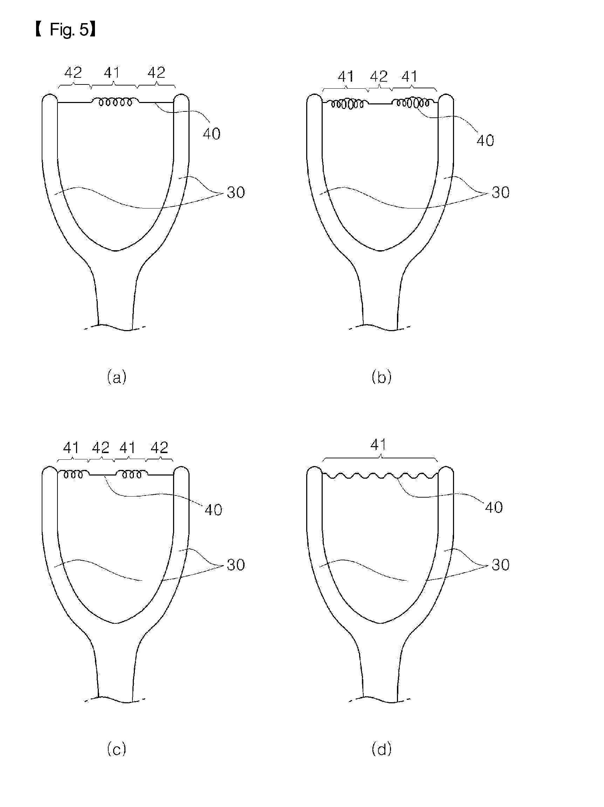

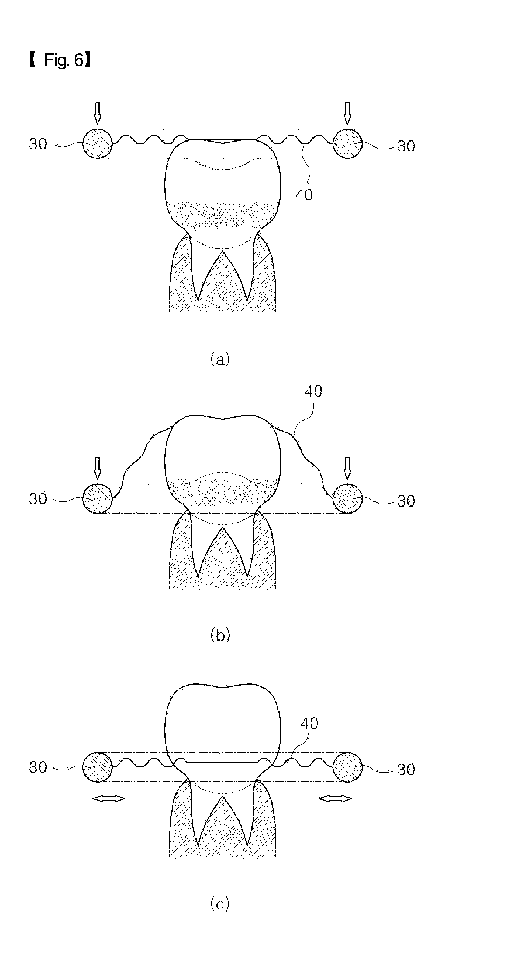

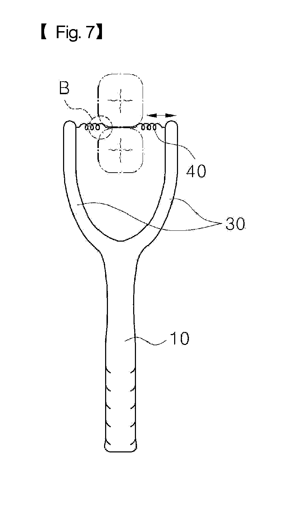

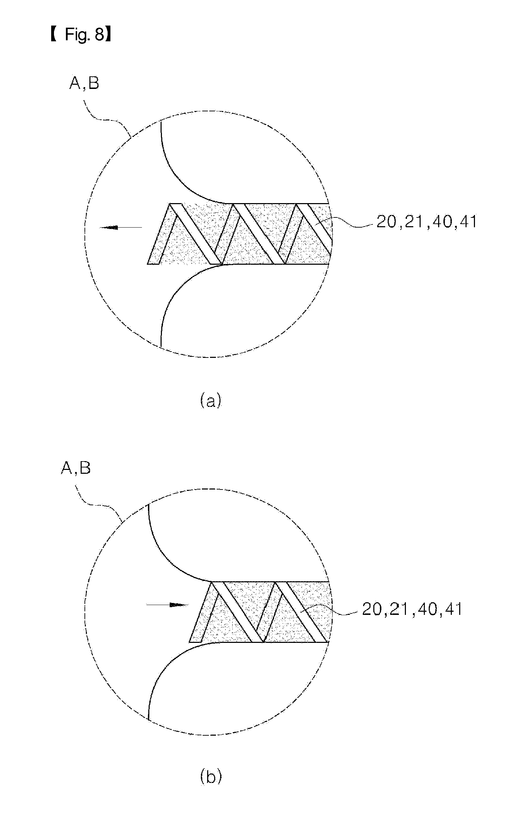

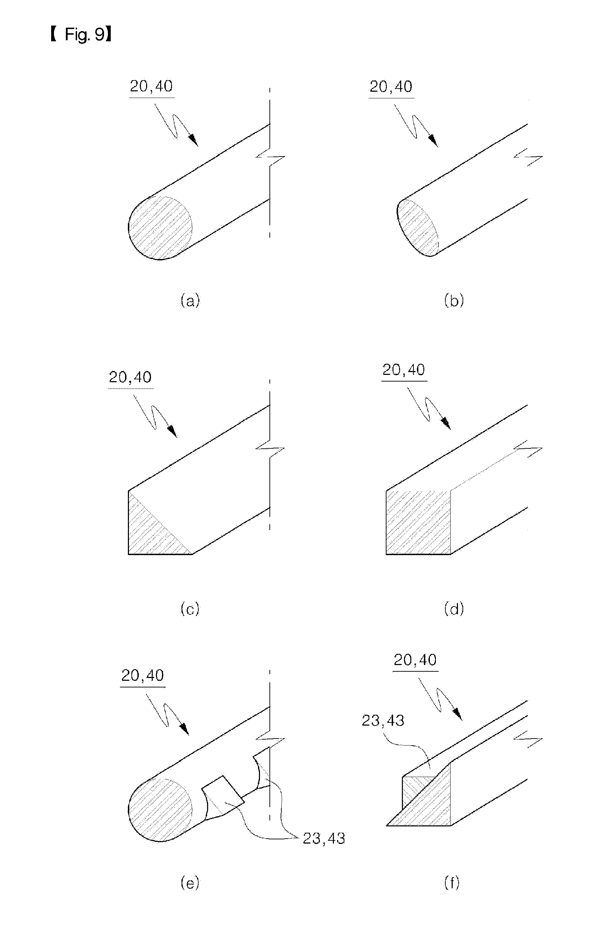

FIG. 5 is of views illustrating various modifications of the coil type interdental brush shown in FIG. 4. FIG. 6 is of front projection views showing a process of inserting the coil type interdental brush of FIG. 4 or 5 between the teeth. FIG. 7 is a plan view illustrating the use of the coil type interdental brush shown in FIG. 4 or 5. FIG. 8 is of enlarged views showing a circle portion A of FIG. 3 or a circle portion B of FIG. 7. FIG. 9 is of sectional perspective views illustrating various examples of a brush part or a dental floss part according to the present invention.

The coil type interdental brush according to the present invention may comprise a handle 10 and a brush part 20, as shown in FIGS. 1 and 2, or, it may comprise a handle 10, a support part 30 and a dental floss part 40, as shown in FIG. 4 and 5.

The handle 10 is preferably formed such that a user can easily hold it using one of his/her hands and conveniently use the interdental brush. The length and shape of the handle 10 are not especially limited, but it is preferable that the handle 10 be formed in a length appropriate for the user to hold it using one of his/her hands or in a length and thickness appropriate to its being held using at least his/her thumb and index finger.

As shown in FIGS. 1, 2a, 2b, 2c and 2d, in the interdental brush including the handle 10 and the brush part 20, the brush part 20 is coupled to the handle 10 and includes a coiled portion 21 which has a coil shape or is formed by repeatedly bending.

As shown in FIGS. 3 and 8, the brush part 20 is inserted between the teeth and removes food remnants from the teeth in such a way that while the brush part 20 moves forwards and backwards, it pushes the food remnants out of the teeth or collects the food remnants in a space in the coiled portion 21 using the elastic deformation and restoring force of the coiled portion 21.

As shown in FIGS. 4, 5a, 5b, 5c and 5d, in the interdental brush including the handle 10, the support part 30 and the dental floss part 40, the support part 30 has a bifurcate structure in which it branches into two parts from one end of the handle 10. The dental floss part 40 is supported between the two branched ribs of the support part 30 and includes a coiled portion 41 which has a coil shape or is formed by repeated bending.

With regard to the support part 30, the teeth are placed between the branched ribs of the support part 30, and the support part 30 is moved upwards, downwards, leftwards or rightwards in the mouth by controlling the handle 10 to remove food remnants trapped between the teeth. Hence, it is preferable that a distance between the two branched ribs of the support part 30 falls inside a range of from two to four times greater than the thickness of a molar tooth. Furthermore, preferably, the ribs of the support part 30 are relatively thin in order to minimize an inconsistent sensation when cleaning the molar teeth.

The dental floss part 40 is inserted between teeth through a process shown in FIGS. 6a, 6b and 6c. Thereafter, In the same manner as the brush part 20, as shown in FIGS. 7 and 8, the dental floss part 40 removes food remnants from the teeth in such a way that while the dental floss part 40 moves forwards and backwards, it pushes the food remnants out of the teeth or collects the food remnants in a space in the coiled portion 41 using the elastic deformation and restoring force of the coiled portion 41.

In the brush part 20 or the dental floss part 40, as shown in FIGS. 1, 2d and 5d, the coiled portion 21 or 41 may be continuously formed along the entire length of the brush part 20 or the dental floss part 40. Alternatively, as shown in FIGS. 2a, 2b, 2c, 4, 5a, 5b and 5c, as well as having the coiled portion 21 or 41, the brush part 20 or dental floss part 40 may further have a linear portion 42 which is not coiled.

In the case where the coiled portion 21 or 41 is continuously formed along the entire length of the brush part 20 or the dental floss part 40, as shown in FIG. 1, 2d and 5d, an even interdental cleaning effect can be ensured throughout the entire length of the brush part 20 or the dental floss part 40.

As shown in FIG. 1, in the case where the coiled portion 21 or 41 has a coil shape, food remnants can be effectively held in the coiled portion 21 or 41, and an even cleaning effect can be ensured in all the directions of the coiled portion 21 or 41. As shown in FIGS. 2d and 5d, in the case where the coiled portion 21 or 41 is formed into a shape which is repeatedly bent, the coiled portion 21 or 41 can be more easily inserted between teeth, and the cleaning effect can be focused in special directions corresponding to the directions in which the coiled portion 21 or 41 is bent.

Furthermore, as shown in FIGS. 2a, 2b, 2c, 4, 5a, 5b and 5c, in the case where the brush part 20 or the dental floss part 40 has a combined structure formed by combining the coiled portion 21 or 41 with the linear portion 22 or 42, the brush part 20 or the dental floss part 40 can be easily inserted between teeth through the linear portion 22 or 42, and a satisfactory interdental cleaning effect can be ensured by the coiled portion 21 or 41.

As shown in FIGS. 2a and 5a, in the case where the brush part 20 or the dental floss part 40 is configured such that linear portions 22 or 42 are connected to respective both ends of the coiled portion 21 or 41, the linear portion 22 or 42 which is disposed at one end of the brush part 20 or the dental floss part 40 may be easily inserted between teeth in a direction going from the front surfaces of the teeth towards the rear surfaces thereof. Alternatively, the linear portion 22 or 42 which is disposed at the other end of the brush part 20 or the dental floss part 40 may be easily inserted between teeth in a direction going from the rear surfaces of the teeth towards the front surfaces thereof. Subsequently, the coiled portion 21 or 41 is consecutively inserted between the teeth to remove food remnants from the teeth.

With regard to the insertion the linear portion 22 or 42 of the brush part 20 or the dental floss part 40 between teeth, although the linear portion 22 or 42 has a length less than the thickness of a tooth, the linear portion 22 or 42 can be easily inserted between teeth by tilting the linear portion 22 or 42 and first inserting it into the gap between the adjacent corners of the teeth. However, preferably, the linear portion 22 or 42 has a length corresponding to the thickness of the thickest molar tooth to more easily be able to be inserted between teeth.

As shown in FIGS. 2b and 5b, in the case where the coiled portion 21 or 41 is formed into a shape such that the radius of curvature thereof is increased or reduced from the two ends thereof to the medial portion thereof, elastic deformation or restoring force of the coiled portion 21 or 41 can is varied depending on the position in the coiled portion 21 or 41. In addition, the coiled portion 21 or 41 can be easily inserted between teeth through a portion having a comparatively small radius of curvature.

As shown in FIGS. 2c and 5c, in the case where several coiled portions 21 or 41 and several linear portions 22 or 42 alternate with each other, one linear portion 22 or 42 is inserted between teeth and the brush part or the dental floss part is moved forwards and backwards. Then, the coiled portions 21 or 41 which are provided on the two ends of the linear portion 22 or 42 can effectively clean front and rear portions of the interdental space which increase in distance between the teeth.

The brush part 20 or the dental floss part 40 may be formed by injection molding, extruding, cutting or grinding. As shown in FIGS. 9a and 9b, the brush part 20 or the dental floss part 40 may have a rounded cross-section, such as a circular or elliptical cross-section, such that the circumferential outer surface thereof forms a rounded surface. Alternatively, as in FIGS. 9c and 9d, the brush part 20 or the dental floss part 40 may have one of a polygonal cross-section, such as a triangular or rectangular cross-section, and a semicircular cross-section such that pointed portions or bent surfaces are formed around the outer surface thereof.

In the case where the circumferential outer surface of the brush part 20 or the dental floss part 40 is rounded, because the surface thereof which comes into contact with the teeth and gums of the user is smooth, the teeth and gums can be prevented from being injured. In the case where pointed portions or bent surfaces are formed on the outer surface of the brush part 20 or the dental floss part 40, food remnants can be more effectively removed from the teeth by the pointed portions or edges formed by the bent surfaces.

Furthermore, in the case of the brush part 20 or the dental floss part 40 having a rounded outer surface or a polygonal or semicircular cross-section, as shown in FIG. 9e, partially pointed portions or edges may be added to the brush part 20 or the dental floss part 40 in such a way that a plurality of protrusions 23 or 43 is provided on the outer surface of the brush part 20 or the dental floss part 40 or a single protrusion 23 or 43 which is continuous in the longitudinal direction of the brush part 20 or the dental floss part 40 protrudes from the outer surface of the brush part 20 or the dental floss part 40 in the radial direction.

In addition, in the case where the brush part 20 or the dental floss part 40 having one of the cross-sections of FIGS. 9a through 9f is formed to have a thickness ranging from 0.01mm to 0.2mm by injection molding using a micro-mold, the flexibility and elasticity of the brush part 20 or the dental floss part 40 can be optimized such that stimulation applied to the teeth or gums of the user is minimized.

The brush part 20 or the dental floss part can be made of any material, for example, metal, plastic, silicone, etc., without being limited to any special material, as long as it can be formed by injection molding, extruding, cutting or grinding and can realize the structure, operation and effects according to the present invention. However, unlike the handle 10 or the support part 30 which can be made of not only a hard but also a soft material, it is preferable that the brush part 20 or dental floss part 20 be made of a hard material to provide the elastic deformation and restoring force of the coiled portion 21 or 41 and enhance abrasion resistance in consideration of friction with teeth.

Furthermore, the handle 10, the brush part 20, the support part 30 or the dental floss part 40 may be made of the natural material or synthetic resin which is typically used in manufacturing general dental floss, but, preferably, it is formed by extruding or injection molding using a biodegradable plastic melt which is made from one or a mixture of two or more of PCL (polyε -caprolactone), PLA (polylactic acid), Diol/Diacid based-on aliphatic polyester, PG (polyglycolic acid), polyphosphate ester and polyphosphazene.

As such, in the case where the interdental brush is made of biodegradable plastic, it is environmentally-friendly because it is highly degradable. Furthermore, even if the interdental brush is brought into contact with the human body or part thereof is absorbed by the human body, safety or health problems, for example, skin irritation, accumulation inside the body, carcinogenesis, etc., which have been caused by contact being made with conventional artificial synthetic products or the taking in thereof, are prevented due to the environmentally-friendly and biodegradable characteristics. Therefore, the interdental brush of the present invention can be safely used for medical treatment, experimentation, makeup application and on children, old people, etc.

In addition, in the process of manufacturing the brush part or the dental floss part having fine thickness, elasticity and flexibility appropriate to the intended purposes can be obtained by controlling a ratio of an additive, such as polymer, lubricant, emulsifying agent, etc., to biodegradable plastic. As well, the brush part or the dental floss part can be reliably formed into a floss shape of a micrometer size by injection molding or extruding a biodegradable plastic melt.

The handle 10 and the brush part 20, or the handle 10 and the support part 30, or support part 30 and the dental floss part 40 may be separately formed and assembled with each other. Alternatively, they may be integrally formed by injection molding. In this case, due to the stable integrated structure, the lifetime of the interdental brush can be increased, and the interdental brush can be maintained clean merely by washing, because a fine gap is not formed between parts.

With regard to the process of integrally forming the handle 10 and the brush part 20, or the handle 10 and the support part 30, or support part 30 and the dental floss part 40, they can be integrated with each other by consecutively forming them through a double injection molding process. This injection molding method can be used even in the case where the handle 10 and the brush part 20, or the handle 10 and the support part 30, or support part 30 and the dental floss part 40 have different hardness, elasticity and color.

In the coil type interdental brush according to the present invention having the above-mentioned structure, food remnants can be easily removed from teeth by the simple operation of passing the brush part 20 or the dental floss part 40 between the teeth in such a way that while the brush part 20 or the dental floss part 40 moves forwards and backwards, it pushes the food remnants out of the teeth or collects the food remnants in a space in the coiled portion 21 or 41 by using the elastic deformation and restoring force of the coiled portion 21 or 41.

The interdental brush of the present invention has superior cleaning ability to the extent of satisfactorily removing food remnants from the teeth. In addition, food remnants which are collected by the brush part 20 or the dental floss part 40 can be easily removed therefrom by putting the brush part 20 or the dental floss part 40 into a cup containing water and lightly shaking the brush part 20 or the dental floss part 40 or by bringing it into contact with flowing water. Accordingly, the interdental brush of the present invention can be effectively used for the prevention of dental disease.

Moreover, despite having a simple structure including only the coiled portion 21 or 41 without having lots of bristles or a separate angle control means, superior cleaning ability can be exhibited. Therefore, the manufacturing process and equipment for manufacturing the interdental brush can be simplified. As a result, the equipment and production cost required for manufacturing the interdental brush can be markedly reduced.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A coil type interdental brush, comprising:
a handle (10); and
a brush part (20) connected to the handle (10) and having a coiled portion (21), the coiled portion (21) having a coil shape or being repeatedly bent, so that the brush part (20) is inserted between teeth and removes food remnants from the teeth in such a way that while the brush part (20) moves forwards and backwards, the brush part (20) pushes out the food remnants from the teeth or collects the food remnants in a space in the coiled portion (21) using an elastic deformation and restoring force of the coiled portion (21).

2. A coil type interdental brush, comprising:
a handle (10);
a support (30) branching from an end of the handle (10) into two parts; and
a dental floss part (40) supported between the two branches of the support (30) and having a coiled portion (41), the coiled portion (41) having a coil shape or being repeatedly bent, so that the dental floss part (40) is inserted between teeth and removes food remnants from the teeth in such a way that while the dental floss part (40) moves forwards and backwards, the dental floss part (40) pushes the food remnants out of the teeth or collects the food remnants in a space in the coiled portion (41) using an elastic deformation and restoring force of the coiled portion (41).

3. The coil type interdental brush according to claim 1 or 2, wherein the coiled portion (21) of the brush part or the coiled portion (41) of the dental floss part is continuously formed along an entire length of the brush part (20) or the dental floss part (40).

4. The coil type interdental brush according to claim 1 or 2, wherein the coiled portion (21) of the brush part or the coiled portion (41) of the dental floss part has a radius of curvature which increases or is reduced from both ends of the coiled portion (21) or (41) to a medial portion thereof with respect to a longitudinal direction of the coiled portion (21) or (41).

5. The coil type interdental brush according to claim 1 or 2, wherein the brush part (20) or the dental floss part (40) further has a linear portion (22) or (42) which does not bend.

6. The coil type interdental brush according to claim 5, wherein the linear portion (22) of the brush part or the linear portion (42) of the dental floss part has a length corresponding to a thickness of a molar tooth.

7. The coil type interdental brush according to claim 5, wherein the brush part (20) or the dental floss part (40) has coiled portions (21) or (41) and linear portions (22) or (42) which alternate with each other.

8. The coil type interdental brush according to claim 1 or 2, wherein the brush part (20) or the dental floss part (40) has one rounded cross-section including a circular cross-section and an elliptical cross-section, such that a circumferential outer surface thereof forms a rounded surface.

9. The coil type interdental brush according to claim 1 or 2, wherein the brush part (20) or the dental floss part (40) has one polygonal cross-section including a triangular cross-section and a rectangular cross-section, and a semicircular cross-section, such that pointed portions or bent surfaces are formed around an outer surface thereof.

10. The coil type interdental brush according to claim 1 or 2, wherein a plurality of protrusions (23) or (43) is provided on an outer surface of the brush part (20) or the dental floss part (40), or a single protrusion (23) or (43) protrudes from the outer surface of the brush part (20) or the dental floss part (40) in a radial direction, the single protrusion (23) or (43) being continuous in a longitudinal direction of the brush part (20) or the dental floss part (40).

11. The coil type interdental brush according to claim 1 or 2, wherein the brush part (20) or the dental floss part (40) is made of one selected from metal, plastic and silicone.

12. The coil type interdental brush according to claim 1 or 2, wherein the handle (10), the brush part (20), the support part (30) or the dental floss part (40) is made of biodegradable resin.

13. The coil type interdental brush according to claim 12, wherein the handle (10), the brush part (20), the support part (30) or the dental floss part (40) is formed by extruding or injection molding using biodegradable plastic melt which is made from one or a mixture of two or more of PCL (polyε -caprolactone), PLA (polylactic acid), Diol/Diacid based-on aliphatic polyester, PG (polyglycolic acid), polyphosphate ester and polyphosphazene.

14. The coil type interdental brush according to claim 1 or 2, wherein the handle (10) and the brush part (20), or the handle (10) and the support (30), or the support (30) and the dental floss part (40) are integrally formed by injection molding.

15. The coil type interdental brush according to claim 14, wherein the handle (10) and the brush part (20), or the handle (10) and the support (30), or the support (30) and the dental floss part (40) have different hardnesses, elasticities and colors, and the handle (10) and the brush part (20), or the handle (10) and the support part (30), or support part (30) and the dental floss part (40) are consecutively integrally formed with each other through a double injection molding process.

16. The coil type interdental brush according to claim 14, wherein the brush part (20) or the dental floss part (40) is formed in a thickness ranging from 0.01mm to 0.2mm by injection molding using a micro-mold.
